# EUROPÄISCHE PATENTANMELDUNG

(11) **EP 1 106 226 A1**
(43) Veröffentlichungstag der Anmeldung: **13.06.2001**
(21) Anmeldenummer: 00126348.2
(22) Anmeldetag: 02.12.2000
(51) Int. Cl.: B01D 24/16, C02F 1/42, C02F 1/28

(54) **Wasserfilter mit Filtermaterialtrennelement**

(30) Priorität: 06.12.1999 DE 19958647
(71) Anmelder: Brita GmbH, 65232 Taunusstein (DE)
(72) Erfinder: Malsy, Jürgen, 63110 Rodgau (DE); Heitele, Dr. Bernd, 65232 Taunusstein (DE)
(74) Vertreter: Weber, Dieter, Dr.

(57) **Zusammenfassung**

Wasserfilter mit einem Wasserzulauf und einem Wasserabgang mit einem im wesentlichen zylindrischen oder konischen Aufnahmebehälter (30) für wenigstens zwei verschiedene Filtermaterialien, welche so angeordnet sind, daß sie zwischen Wasserzulauf und Wasserabgang durchströmt werden, wobei in dem Aufnahmebehälter (30) ein Trennelement (38) vorgesehen ist, das zwei Bereiche (36, 37) des Aufnahmebehälters (30) gegen einen Durchtritt von Filtermaterial voneinander abteilt.

Um bei einem solchen Wasserfilter mit wenigstens zwei verschiedenen Filtermaterialien zu gewährleisten, daß die Filtermaterialien leicht voneinander getrennt werden können und der Wasserfilter gleichzeitig lageunabhängig betrieben werden kann, besteht das Trennelement (30) aus elastischem oder flexiblem Material und ist aus dem Aufnahmebehälter entfernbar.

## Beschreibung

Die vorliegende Erfindung betrifft einen Wasserfilter mit einem Wasserzulauf und einem Wasserabgang und mit einem im wesentlichen zylindrischen oder konischen Aufnahmebehälter für wenigstens zwei verschiedene Filtermaterialien, welche so angeordnet sind, daß sie zwischen Wasserzulauf und Wasserabgang durchströmt werden, wobei in dem Aufnahmebehälter ein Trennelement vorgesehen ist, das zwei Bereiche des Aufnahmebehälters gegen einen Durchtritt von Filtermaterial voneinander abteilt.

Wasserfilter werden im Haushalt oder in Großküchen zur Aufbereitung von Rohwasser zur Zubereitung von Speisen und Getränken eingesetzt. Wasserfilter können auch zentral in einem Gebäude vorgesehen sein, um beispielsweise Rohwasser vor der Einspeisung in das Wasserleitungssystem des gesamten Gebäudes zu enthärten. Man unterscheidet zwischen Druckwasserfiltern und druckfreien Wasserfiltem. Druckwasserfilter weisen einen das Filtermaterial enthaltenden Druckbehälter auf, durch den das unter Druck stehende Rohwasser hindurchgepreßt wird. Entsprechende bekannte Druckbehälter sind zumeist auch noch mit einer angeflanschten oder aufgeschraubten oder auch einstückig mit dem Druckbehälter ausgebildeten Armatur mit genormten Zugangs- und Abgangsverbindungen versehen. Aufgrund des Wasserdrucks können solche Druckwasserfilter im wesentlichen unabhängig von der Schwerkraft des Wassers betrieben werden, das heißt das Rohwasser kann das Filterbett mit der Schwerkraft (abwärts) durchströmen, es kann aber auch gegen die Schwerkraft (aufwärts) oder auch in einer horizontalen Richtung durch das Filterbett geleitet werden. Bei druckfreien Wasserfiltem, wie sie beispielsweise für die Aufbereitung von Trinkwasser im Haushalt bekannt sind, weist ein üblicherweise zylindrischer Aufnahmebehälter, der mit Filtermaterial gefüllt ist, obere Öffnungen für den Wasserzulauf und untere Öffnungen für den Wasserabgang auf. In den oberen Wasserzulauf einfließendes Wasser durchströmt das Filtermaterial in dem Aufnahmebehälter alleine aufgrund der Schwerkraft und tritt als aufbereitetes Wasser aus den unteren Öffnungen aus. Es sind auch Wasserfilter bekannt, bei denen das Rohwasser von unten nach oben unter sehr niedrigem Druck durch das Filterbett strömt, so daß für solche Wasserfilter kein Druckbehälter erforderlich ist. Solche Wasserfilter funktionieren nach dem Prinzip kommunizierender Röhren, wobei eine über dem Niveau der Filteraustrittsöffnung stehende Rohwassersäule den Wasserdruck erzeugt, der erforderlich ist, daß das Wasser aufwärts durch das Filterbett strömen kann.

Das zur Aufbereitung von Rohwasser verwendete Filtermaterial ist im allgemeinen eine Mischung aus Aktivkohle und einem lonenaustauscherharz, gegebenenfalls unter Zusatz von Silber bzw. Silberionen, die der Entkeimung dienen sollen. Die Aktivkohle adsorbiert unerwünschte organische Bestandteile des Rohwassers, Chlor und Chlorverbindungen, während das lonenaustauscherharz vor allem eine Enthärtung des Rohwassers bewirkt. Üblicherweise wird als lonenaustauscher ein schwach saurer Kationenaustauscher verwendet. Andere für die Wasseraufbereitung häufig verwendete Filtermaterialien sind beispielsweise Zeolithe.

Je nach der Menge des aufbereitenden Wassers ist die Filterkapazität solcher Filtermaterialien früher oder später erschöpft, das heißt nach einem entsprechenden Zeitraum, der zwischen etwa 4 Wochen und mehreren Monaten beträgt, muß das Filtermaterial ausgetauscht werden. Auch wenn der weitaus größte Teil des Filtermaterials zumeist aus lonenaustauscherharz besteht, ist dieses meistens zuerst erschöpft und nicht mehr in der Lage, weitere lonen aufzunehmen, so daß eine Wasserenthärtung und Entmineralisierung nicht mehr stattfinden kann. Bei Druckwasserfiltem erfolgt der Austausch des Filtermaterials zumeist in der Weise, daß der komplette Druckbehälter, unter Umständen einschließlich der damit fest verbundenen Armaturen, ausgetauscht und zum Entsorgen oder Recyceln des Filtermaterials sowie zum erneuten Füllen an den Hersteller zurückgegeben wird. Druckfreie Wasserfilter, insbesondere kleinere Ausführungen, die zur Aufbereitung von Rohwasser für die Bereitung von Speisen und Getränken im Haushalt Verwendung finden, bestehen in der Regel aus einer Kanne, in die eine mit den Filtermaterialien gefüllte Austauschkartusche eingesetzt wird. Ist das Filtermaterial in der Kartusche erschöpft, so wird die Kartusche aus der Kanne entnommen und durch eine neue ersetzt. Die verbrauchten Filterkartuschen können zum Recyceln an den Hersteller zurückgegeben werden, wo das Filtermaterial wieder aufbereitet wird und auch die Kartusche selbst entweder wieder gefüllt oder umweltgerecht verwertet wird.

Bei den bekannten Wasserfiltern sind die verschiedenen gleichzeitig zum Einsatz kommenden Filtermaterialien, üblicherweise Aktivkohle und lonenaustauscherharz, als ein mehr oder weniger homogenes Gemisch in dem Aufnahmebehälter bzw. der Filterkartusche enthalten. Da die Aufbereitung der verbrauchten Aktivkohle- und lonenaustauschermaterialien unterschiedliche Aufbereitungsverfahren erfordert bzw. das lonenaustauschermaterial wegen seines hohen Grundpreises und der verhältnismäßig einfachen Regenerierung in der Regel aufbereitet wird und das Aktivkohlematerial wegen seines relativ niedrigen Grundpreises und der schwierigen und aufwendigen Aufbereitung verworfen wird, müssen die Filtermaterialien vor der Aufbereitung in Ihre einzelnen Bestandteile getrennt werden. Die Trennung der verschiedenen Filtermaterialien erfordert jedoch ein aufwendiges und mit nicht unerheblichen Kosten verbundenes Verfahren. Es wäre daher wünschenswert, die Trennung der verbrauchten, in einem Wasserfilter enthaltenen Filtermaterialien zu erleichtern. Das US-Patent 2,017,456 beschreibt einen Wasserfilter, bestehend aus einer Kanne mit einem Rohwasserbehälter und einem davon getrennten, darunterliegenden Auffangbehälter für gefiltertes Wasser sowie einer Filtereinheit, die mit Filtermaterial gefüllt ist und durch die das Rohwasser aufgrund der Schwerkraft in den darunterliegenden Auffangbehälter für das gefilterte Wasser strömen kann. Die Filtereinheit besteht aus einem Aufnahmebehälter, der zwei übereinander angeordnete, voneinander getrennte Filterbetten für ein Aktivkohlematerial im oberen Bereich des Aufnahmebehälters und ein bakterizides Material, wie ein Zeolith mit darauf abgeschiedenen Silberpartikeln, im unteren Bereich des Aufnahmebehälters aufweist. Die beiden Filterbetten sind auf Filterträgem gehalten und auch durch den Filterträger auf dem das Aktivkohlematerial liegt voneinander getrennt, wobei die Filterträger aus einer steifen perforierten Platte und einem darunter angeordneten Sieb bestehen. Zwischen der Innenwand des Aufnahmebehälters und der Umfangskante des Filterträgers ist eine Dichtung vorgesehen, die einen Durchtritt von Wasser verhindern soll. Aus einer solchen Vorrichtung können die verbrauchten Filtermaterialien einzeln und bereits voneinander getrennt entnommen und entsorgt oder der Wiederaufbereitung zugeführt werden.

Obwohl die Trennung der Filtermaterialien bei dem vorbeschriebenen Wasserfilter vereinfacht ist, besitzt auch dieser einige Nachteile, die er mit herkömmlichen Wasserfiltern, in denen verschiedene Filtermaterialien als Gemisch vorliegen, gemein hat. Sowohl bei Druckwasserfiltem als auch bei Wasserfiltern, die unter Normaldruck arbeiten, kommt es bei einem Trockenlaufen des Filtermaterials dazu, daß sich das Filtermaterial zusammenzieht oder verklumpt und dabei Kanäle ausgebildet werden, die frei von Filtermaterial sind. Wird anschließend wieder Wasser zugeführt, so strömt dieses aufgrund des geringeren Widerstands vorzugsweise durch solche Kanäle, und zwar im wesentlichen ungefiltert. Das Filtermaterial benötigt erst einige Zeit, um aufzuquellen und diese Kanäle wieder zu füllen. Manche Filtermaterialien verbleiben trotz des zugeführten Wassers in dem zusammengezogenen oder verklumpten Zustand, so daß die verschlechterte Filterwirkung erhalten bleibt.

Das üblicherweise streu- oder fließfähige Filtermaterial sammelt und verteilt sich stets im unteren Bereich des Aufnahmebehälters eines Wasserfilters. Das Filtermaterial verteilt sich dabei gleichmäßig über den gesamten Querschnitt des Aufnahmebehälters, so daß Rohwasser, das von oben auf das Filtermaterial gegeben wird und nach unten strömt oder von unten unter Druck in den Aufnahmebehälter gepreßt wird in jedem Fall mit dem Filtermaterial in Berührung kommt, auch wenn über dem streufähigen Filtermaterial ein leerer Raum vorhanden ist. Ein Wasserfilter mit einem zylindrischen oder konischen Aufnahmebehälter muß dabei jedoch stets in aufrechter Position gehalten werden. Wird der Wasserfilter geneigt oder gar vollständig um 90° auf die Seite gelegt, so verteilt sich das Filtermaterial über der unten liegenden Seitenwand des Aufnahmebehälters, und darüber entsteht ein Freiraum, durch den das Wasser in ähnlicher Weise, wie bei der vorgenannten Kanalbildung, ungefiltert hindurchfließt. Um dies zu verhindern, ist es jedoch auch nicht möglich, den Aufnahmebehälter vor dem Verschließen vollständig mit Filtermaterial zu befüllen und anschließend das Filtermaterial fest einzuschließen, so daß eine Hohlraumbildung nicht mehr möglich ist, da insbesondere das lonenaustauscherharz bei Kontakt mit Wasser um bis zu 10 % seines Trockenvolumens aufquillt. Aus diesem Grund sind die Aufnahmebehälter üblicher Wasserfilter nicht fest mit Filtermaterial gepackt, sondern man läßt nach dem Befüllen des Aufnahmebehälters mit dem trockenen Filtermaterials mindestens so viel Raum, daß sich das Material beim Quellen in ausreichendem Maße ausdehnen kann. Der hierfür erforderliche Raum, den das Filtermaterial beim Quellen zusätzlich einnimmt, variiert je nach Trägermaterial und läßt sich nur sehr schwer und unter Aufwand genau einstellen, so daß die Herstellung von lageunabhängigen Wasserfilter mit einem hohen Aufwand verbunden ist.

Gegenüber diesem Stand der Technik liegt der vorliegenden Erfindung die Aufgabe zugrunde, einen Wasserfilter mit wenigstens zwei verschiedenen Filtermaterialien zu schaffen, bei dem die Filtermaterialien leicht voneinander getrennt werden können und der gleichzeitig lageunabhängig betrieben werden kann.

Diese Aufgabe wird durch einen Wasserfilter der eingangs genannten Art gelöst, bei dem das Trennelement oder ein weiteres, mindestens eines der Filtermaterialien begrenzendes Element aus elastischem oder flexiblen Material besteht und aus dem Aufnahmebehälter entfembar ist.

Für die Beschreibung und Darstellung der vorliegenden Erfindung und bevorzugter Ausführungsformen derselben wird Bezug genommen auf drei weitere, gleichzeitig eingereichte Patentanmeldungen derselben Anmelderin, die auf ihrem jeweiligen Deckblatt mit den internen Zeichen NE-70, NE-72 und NE-73 bezeichnet sind. Der Inhalt dieser Anmeldungen soll die vorliegende Anmeldung ergänzen, soweit einzelne Merkmale hier nicht ausdrücklich beschrieben sind.

Bei üblichen Wasserfiltem, die als Filtermaterialien einen lonenaustauscherharz und Aktivkohle verwenden, wird zunächst eines der beiden Filtermaterialien in den Aufnahmebehälter gefüllt, das erfindungsgemäß elastische oder flexible Trennelement darüber angeordnet und anschließend darauf das zweite Filtermaterial gegeben, bevor der Aufnahmebehälter verschlossen wird. Das Trennelement gewährleistet einerseits, daß sich die beiden Filtermaterialien nicht miteinander vermischen und sie später wieder getrennt aus dem Aufnahmebehälter entnommen werden können, wenn das Filtermaterial verbraucht ist. Andererseits läßt sich das Filtermaterial zunächst dicht gepackt in den Aufnahmebehälter einfüllen ohne daß Hohlräume entstehen. Aufgrund der Elastizität oder Flexibilität des Materials, aus dem das Trennelement besteht, kann das Filtermaterial fest und sogar unter einer gewissen Vorspannung des Trennelements in den Aufnahmebehälter eingefüllt und dieser verschlossen werden. Quillt das Filtermaterial durch das in den Filter eingeleitete Wasser auf, so kann es sich ausdehnen, wobei das Trennelement nachgibt und zusammengedrückt wird. Schrumpft das Filtermaterial, so gleicht das Trennelement aufgrund seiner Elastizität bzw. Flexibilität den entstehenden Volumenverlust und damit die Bildung von Hohlräumen in dem Aufnahmebehälter aus. Hierbei ist es besonders vorteilhaft, wenn das Trennelement bereits beim Befüllen des Aufnahmebehälters mit den Filtermaterialien etwas zusammengedrückt und eine Vorspannung hergestellt wird. Da das Trennelement des erfindungsgemäßen Wasserfilters die Ausbildung von größeren Hohlräumen und damit von Kanälen, durch die Wasser ungefiltert hindurchströmen kann, in dem Aufnahmebehälter verhindert, kann der erfindungsgemäße Wasserfilter in jeder beliebigen Lage verwendet werden. Dies ist insbesondere bei Druckwasserfiltem besonders vorteilhaft. Druckwasserfilter weisen einen besonders stabilen und daher auch verhältnismäßig voluminösen Druckbehälter auf, um den entsprechenden Wasserdrücken stand zu halten. Weiterhin werden Druckwasserfilter häufig dort eingesetzt, wo mittlere bis große Wassermengen mit hohen Durchflußraten benötigt werden, so daß solche Filter von vornherein bereits verhältnismäßig groß dimensioniert sind. Das Volumen der Druckbehälter solcher Wasserfilter beträgt je nach Anwendungsfall typischerweise zwischen etwa 3 Liter und etwa 12 Liter oder mehr. Aus Platzgründen ist es daher häufig vorteilhaft, wenn solche Wasserfiltereinheiten nicht nur aufrecht, sondern auch liegend oder in einer anderen Position installiert und verwendet werden können, wenn die räumlichen Gegebenheiten dies erfordern. Bei erfindungsgemäßen Wasserfiltern ist dies aufgrund des elastischen oder flexiblen Trennelements in dem Aufnahmebehälter möglich.

Es versteht sich, daß die der Erfindung zugrunde liegende Aufgabe auch dann gelöst wird, wenn nicht das Trennelement selbst elastisch bzw. flexibel ist, sondern wenn auf einer anderen, eines der Filtermaterialien begrenzenden Seite, die der Trennfläche abgewandt ist, ein entsprechendes elastisches Material als Begrenzungselement vorgesehen ist, welches Volumenänderungen des Filtermaterials elastisch auffangen kann.

Bei einer erfindungsgemäß besonders bevorzugten Ausführungsform ist ein Filtermaterial des Wasserfilters ein lonenaustauscherharz und ein weiteres Filtermaterial Aktivkohle. Vorzugsweise wird die Aktivkohle in Form von Granulat verwendet. Das Granulat bietet ausreichend Oberfläche für den Kontakt zwischen Aktivkohle und Wasser, läßt jedoch zwischen den einzelnen Körnern des Granulats ausreichend Hohlräume, so daß die Strömung des Wassers nicht stark blockiert wird. Bei einer weiteren bevorzugten Ausführungsform wird die Aktivkohle in Form eines Aktivkohleblocks eingesetzt. Solche Filterblöcke bestehen aus einer kompakten Einheit, in der das Aktivkohlematerial zusammen mit einem Bindemittel, wie Polyethylen, zu einem porösen, durchströmbaren Block gesintert wurde. Der Aktivkohleblock kann in Form einer zweckmäßigerweise an den Querschnitt des Aufnahmebehälters angepaßten Kreisscheibe oder eines Ringes vorliegen oder aber auch als Hohlzylinder.

Zweckmäßigerweise hat das Trennelement des erfindungsgemäßen Wasserfilters einen Kreisscheiben- oder Ringform, welche dem Innenquerschnitt des Aufnahmebehälters angepaßt ist. Neben dem Material ist die Dicke des Trennelements mitbestimmend, in welchem Ausmaß dieses zusammengedrückt werden kann bzw. um welches Volumen sich das Filtermaterial ausdehnen kann. Je nach Größe des Wasserfilters und Volumen des eingefüllten Filtermaterials hat das scheibenförmige Trennelement eine Dicke von einigen Millimetern bis einigen Zentimetern, vorzugsweise 5 Millimeter bis 6 Zentimeter, besonders bevorzugt etwa ein 3 Zentimeter bis 5 Zentimeter. Die Steifigkeit bzw. Federkraft des erfindungsgemäßen Trennelements beträgt bei einer bevorzugten Ausführungsform bei 50 - 70% Pressung des Trennelements etwa 0,3 - 0,8 N/cm².

Bei Wasserfiltern, die zur Aufbereitung von Wasser für die Zubereitung von Speisen und Getränken verwendet werden, besteht das Trennelement zweckmäßigerweise aus einem lebensmittelechten Material, das keine gesundheitsschädlichen oder anderen unerwünschten Stoffe an das hindurchströmende Wasser abgibt. Zur Herstellung des erfindungsgemäßen Trennelements eignen sich alle Materialien, die sich in elastischer oder flexibler Weise zusammendrücken lassen und gleichzeitig von Wasser durchströmbar sind, sei es daß das Material per se offene Poren oder Kanäle aufweist oder daß das Material mit Durchgangsbohrungen versehen ist. Bevorzugt werden zur Herstellung des erfindungsgemäßen Trennelements Fasermaterialien aus Kunstfasern oder Naturfasern, vorzugsweise Vlies oder vliesähnliche Materialien mit offenen Poren verwendet. Als Kunstfasern eignen sich insbesondere Polyethylenfasern (PE), Polypropylenfasem (PP) oder Polyesterfasern, wie z. B. Polyethylenterephthalatfasem (PET). Gemäß einer anderen Ausführungsform eignet sich für das erfindungsgemäße Trennelement auch ein Schaumstoffmaterial.

Vliesmaterialien erhalten Festigkeit und Elastizität zweckmäßigerweise, indem man die Fasern des Vliesmaterials thermisch vernetzt. Man erhält so eine Gerüststruktur aus punktuell miteinander verbundenen Fasern. Das vernetzte Vlies läßt sich zusammenpressen, neigt jedoch stärker als unvemetzte Fasern dazu, seine ursprüngliche Struktur wieder einzunehmen und ist insgesamt somit elastisch.

Bei einer besonders bevorzugten Ausführungsform des erfindungsgemäßen Wasserfilters, der als Druckwasserfilter ausgebildet ist, sind Wasserzulauf und Wasserabgang in einer Armatur enthalten, die auf einer Seite, vorzugsweise an der Oberseite des im wesentlichen zylindrischen oder konischen Aufnahmebehälters angeordnet ist. Das Rohwasser wird durch Zugangsverbindungen in der Armatur in den Aufnahmebehälter eingeleitet und das gefilterte Wasser durch an im wesentlichen der gleichen Stelle angeordneten Abgangsverbindungen wieder entnommen. Sind Wasserzulauf und Wasserabgang in der Armatur nebeneinander auf der gleichen Seite des Aufnahmebehälters vorgesehen, so muß das Rohwasser, damit es durch das Filterbett in dem zylindrischen Aufnahmebehälter strömen kann, zunächst zu dem der Armatur gegenüberliegenden Ende des Aufnahmebehälters geleitet werden, um dann von dort durch das Filtermaterial wieder in Richtung der Armatur zu strömen. Das Rohwasser kann aber auch direkt an der Armatur in das Filtermaterial eingeleitet werden und am gegenüberliegenden Ende des Aufnahmebehälters aufgenommen und zu der Armatur zurückgeleitet werden. Bei einer bevorzugten Ausführungsform des erfindungsgemäßen Wasserfilters ist hierfür ein Rohr oder eine Leitung vorgesehen, die sich von der Armatur durch das Filtermaterial hindurch bis zum gegenüberliegenden Ende des Aufnahmebehälters erstreckt. Vorzugsweise erstreckt sich dieses Rohr mittig in axialer Richtung durch den Aufnahmebehälter und endet entweder kurz vor dem unteren Abschlußende des Aufnahmebehälters oder weist seitliche Öffnungen auf, damit das hindurchgeleitete Rohwasser dort austreten und durch das Filtermaterial wieder zurück in Richtung des Wasserabgangs strömen kann oder um dort das Wasser aufzunehmen, welches am Wasserzulauf direkt in das Filtermaterial eingeleitet wurde und nach durchströmen des Filtermaterials am gegenüberliegenden Ende des Aufnahmebehälters ankommt. Um ein solches Rohr aufnehmen zu können, weist das Trennelement des erfindungsgemäßen Wasserfilters zweckmäßigerweise eine Durchgangsöffnung für den Durchtritt des Rohres auf, welche dem äußeren Umfang des Rohres angepaßt ist, um einen Durchtritt von Filtermaterial zwischen dem Trennelement und dem Rohr zu verhindern. Abhängig von der Anordnung des Rohres in dem Aufnahmebehälter des Wasserfilters ist die Durchgangsöffnung in dem Trennelement mittig oder exzentrisch angeordnet.

Weitere Vorteile, Merkmale und Anwendungsmöglichkeiten der vorliegenden Erfindung werden deutlich an Hand der folgenden Beschreibung bevorzugter Ausführungsformen und der dazugehörigen Figuren. Es zeigen:
- Figur 1: einen axialen Schnitt durch einen erfindungsgemäßen Druckwasserfilter,
- Figur 2: eine perspektivische Ansicht des Aufnahmebehälters des Wasserfilters aus Figur 1, durchsichtig gezeichnet, und
- Figur 3: eine weitere alternative Ausführungsform eines Außenbehälters mit eingesetztem Innenbehälter und aufgesetztem Deckel.

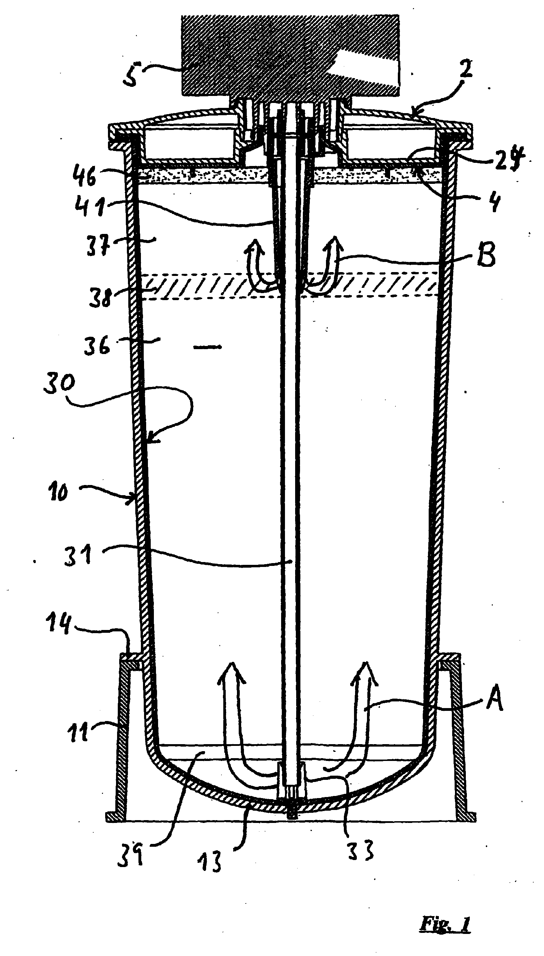

In Figur 1 erkennt man in axialem Schnitt einen erfindungsgemäßen Druckwasserfilter mit einem Druckbehälter 10 und einem darin passend eingesetzten Innen- bzw. Aufnahmebehälter 30. Etwa bei einem Viertel der axialen Gesamtlänge des Druckbehälters 10, vom Boden aus gemessen, ist an dessen Außenwand ein umlaufender Flansch 17 angeformt, der wiederum auf einem den unteren Abschnitt des Druckbehälters umgebenden Standfuß 11 aufsitzt. Der Standfuß 11 erstreckt sich in axialer Richtung etwas über die Ebene der unteren Behälterwand 13 hinaus, so daß der Behälter freistehend aufstellbar ist, wobei er über den Flansch 17 und den Fuß 11 in seiner vertikalen Position gehalten wird. Der obere Rand des Druckbehälters 10 ist als nach Außen umgewendeter und eine radiale Ebene definierender Flansch 12 ausgebildet. Wie man deutlich erkennt, haben der Druckbehälter 10 und der Aufnahmebehälter 30 eine im wesentlichen zylindrische, sich nach unten leicht konisch verjüngende Form, und die Form des Aufnahmebehälters 30 ist der inneren Form des Druckbehälters 10 so exakt angepaßt, daß der Aufnahmebehälter 30 im wesentlichen vollflächig an der Innenwand des Behälters 10 anliegt. Der Aufnahmebehälter 30 ist oben mit einem Deckel 4 verschlossen, der einen umlaufenden Flansch aufweist, welcher bei aufgesetztem Deckel auf einem entsprechenden Flansch an dem Aufnahmebehälter 30 zu liegen kommt. Es ist weiterhin ein Außendeckel 2 zum Druckbehälter 10 vorgesehen, an dem ein Anschluß- bzw. Armaturenelement 5 mit Zugangs- und Abgangsanschlüssen angeordnet ist. Das Armaturenelement 5 weist außerdem noch Meßeinrichtungen zur Messung des durch den Filter hindurchströmenden Wassers auf, die in der Figur 1 nicht wiedergegeben sind. Von dem Armaturenelement 5 erstreckt sich ein Steigrohr 31 mittig in axialer Richtung bis in die Nähe des gegenüberliegenden, unteren Bodens des Aufnahmebehälters 30, wo es in einer Diffusor- oder Siebhülse 33 mündet. Bei der dargestellten Ausführungsform ist im unteren Bereich des Aufnahmebehälters 30 eine sich über den Querschnitt des Behälters erstreckende und über der Diffusor- oder Siebhülse 33 angeordnete Verteiler- und Rückhaltescheibe 32 angeordnet Rohwasser welches durch das Steigrohr 31 Rohwasser, welches durch das Steigrohr 31 nach unten geleitet wird und an der Diffusor- oder Siebhülse 33 aus dem Steigrohr 31 austritt, fließt zunächst in den Raum zwischen dem unteren gewölbten Boden des Aufnahmebehälters 30 und der Verteiler- und Rückhaltescheibe 32, um dann gleichmäßig über den gesamten Querschnitt der Verteiler- und Rückhaltescheibe 32 verteilt in das darüberliegende Filtermaterial einzuströmen. Der Innenraum des Aufnahmebehälters 30 ist zwischen der Verteiler- und Rückhaltescheibe 32 und dem Deckel 4 bzw. einer unmittelbar darunter angeordneten Abdeckscheibe 34 mit Filtermaterial gefüllt, welches nicht zeichnerisch dargestellt ist. Im oberen Drittel dieses Innenraumes des Aufnahmebehälters 30 ist ein Trennelement 38 vorgesehen, das zwei Bereiche 36 und 37 des Aufnahmebehälters 30 voneinander abteilt. Der untere Filterbereich 36 ist vorzugsweise mit einem zumindest schwach saurem lonenaustauscherharz gefüllt, welches in diesem Raum in Form von Kugeln oder als Granulat vorliegt. Der obere Filterbereich 37 ist vorzugsweise mit Aktivkohle gefüllt, welche als Granulat oder als Körner vorliegt. Das Trennelement 38 besteht aus einem elastischen, flexiblen Material, das bei Druck von oben oder unten nachgibt und bei Entlastung seine ursprüngliche Form wieder einnimmt. Das Trennelement 38 ist entsprechend dem Innenquerschnitt des Aufnahmebehälters 30 als Kreisscheibe ausgebildet und seine Umfangfläche liegt über den gesamten Umfang an der Innenwand des Aufnahmebehälters an. Das Trennelement 38 weist weiterhin eine zentrale Durchgangsöffnung 39 für den Durchtritt des Steigrohrs 31 auf.

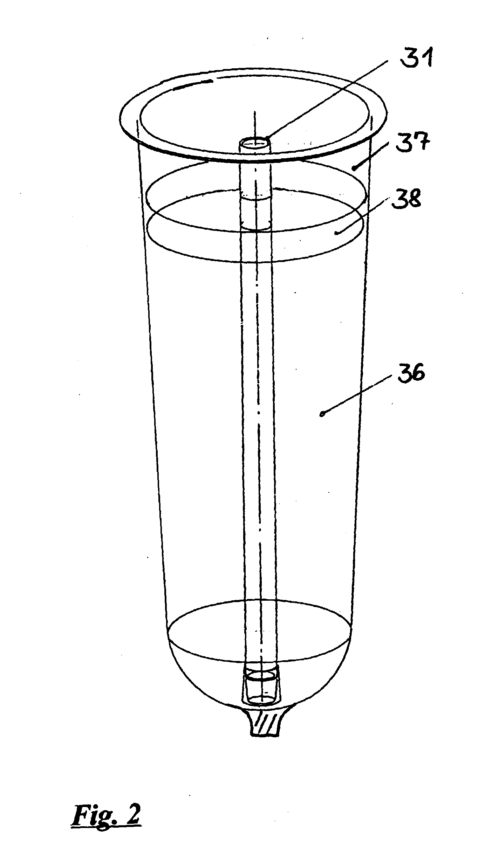

Bei den in den Figuren dargestellten Ausführungsformen eines erfindungsgemäßen Druckwasserfilters ist es möglich, einen Teil des Rohwassers durch beide Filterbereiche 36 und 37 und einen anderen Teil nur durch den Filterbereich 37 hindurchströmen zu lassen und diese unterschiedlich gefilterten Wassermengen anschließend wieder miteinander zu vereinigen bzw. zu verschneiden. Das im unteren Filterbereich 36 vorzugsweise vorgesehene lonenaustauscherharz dient der Wasserenthärtung durch Adsorption von Ca²⁺ und anderen Metallionen. Durch die Filtration des Rohwassers durch die Aktivkohle, die vorzugsweise zusätzlich noch Silber oder Silberionen enthält, werden dem Wasser unerwünschte organische Stoffe entzogen, und das Wasser wird wenigstens teilweise entkeimt. Für bestimmte Anwendungen, wie der Zubereitung bestimmter Speisen oder Getränken, ist eine vollständige Wasserenthärtung unerwünscht. Durch die Möglichkeit, einen Teil des Rohwassers nur durch den Aktivkohlefilter zu leiten und das Wasser anschließend mit dem durch beide Filter geleiteten entionisierten Wasser in beliebig einstellbarem Verhältnis zu verschneiden, läßt sich die Wasserhärte des aufbereiteten Wassers einstellen. Bei den in den Figuren dargestellten Ausführungsformen eines erfindungsgemäßen Wasserfilters ist die Möglichkeit, Rohwasser nur durch den oberen Filterbereich 37 zu leiten, dadurch gelöst, daß eine an dem Armaturenelement 5 mit dem Wasserzulauf verbundene, konzentrisch um das Steigrohr 31 verlaufende und sich mit diesem erstreckende Außenhülse 41 vorgesehen ist, durch die ein Teil des Rohwassers geleitet wird. Die Außenhülse 41 erstreckt sich in axialer Richtung durch das Filtermaterial in dem Filterbereich 37 hindurch und endet vorzugsweise in dem Bereich, wo die Filterbereiche 36 und 37 durch das Trennelement 38 voneinander getrennt sind. Die dargestellte Hülse 41 ist als nach unten konisch zulaufendes Rohr ausgebildet, dessen Außenwandung sich im Mündungsbereich bei dem Trennelement 38 dem Steigrohr 31 stark annähern bzw. an diesem anliegen. Vorzugsweise sind an der Hülse 41 in deren Mündungsbereich seitliche Austrittsschlitze vorgesehen, durch die das Rohwasser aus der Hülse 41 heraus und in das Trennelement 38 einströmen kann. Die Durchtrittsöffnung 39 des Trennelements 38 umfaßt hierbei nicht nur das Steigrohr 31, sondern auch das untere Ende der Hülse 41. Zur Verdeutlichung zeigt Figur 2 den Aufnahmebehälter 30 des Wasserfilters aus Figur 1 in perspektivischer Seitenansicht schräg von oben, wobei zusätzlich das Steigrohr 31 und das Trennelement 38 zur Trennung der Filterbereiche 36 und 37 dargestellt sind.

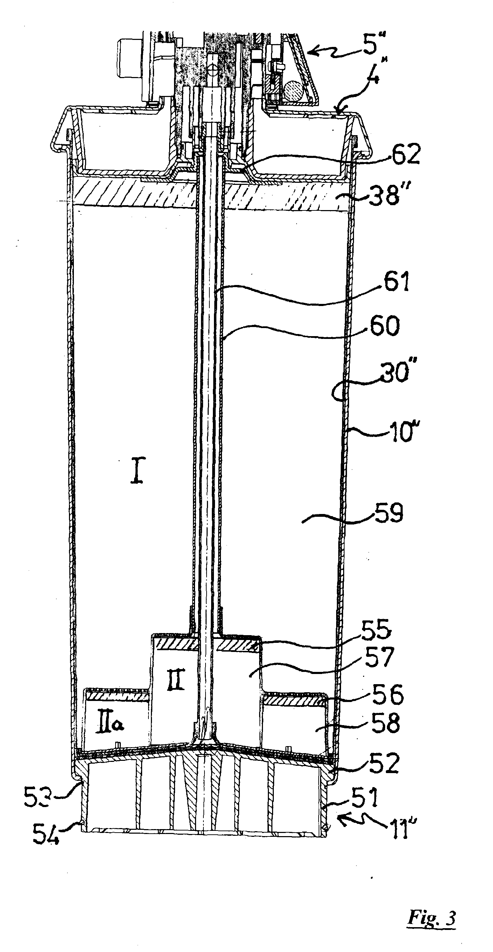

Figur 3 zeigt eine weitere, alternative Ausführungsform der vorliegenden Erfindung. Auch in diesem Fall ist ein Innenbehälter 30" in enger Passung in einen leicht konischen Außenbehälter 10" eingesetzt, wobei die Wandung des Außenbehälters aus einem hinreichend druckfesten Material besteht, wohingegen das Wandmaterial des Innenbehälters 30" gegebenenfalls dünner und auch aus einem weniger stabilen Material hergestellt sein kann, obwohl auch für den Innenbehälter zumindest eine gewisse Formstabilität gegeben sein sollte, solange er nicht unter Druck gesetzt wird.

Im Unterschied zu den vorher beschriebenen Ausführungsformen ist jedoch bei der Ausführungsform gemäß Figur 3 eine sehr große Bodenöffnung vorgesehen, die fast den gesamten Querschnitt im unteren Bereich des Außenbehälters 10" umfaßt, und in welche ein Bodeneinsatz 11" passend eingesetzt ist. Die Öffnung ist kreisförmig und der Innendurchmesser der Öffnung entspricht dem Außendurchmesser eines zylindrischen Fußteiles 51 des Bodeneinsatzes 11", welches nach oben hin nochmals durch einen Ansatz 52 stufenförmig erweitert ist, wobei der stufenförmige Ansatz 52 mit seinem Durchmesser auf den Innendurchmesser im unteren Bereich des Außenbehälters 10" abgestimmt ist, so daß Bodeneinsatz 11" und Außenbehälter 10" zusammen einen unten dicht und lückenlos geschlossenen Hohlraum bilden, in welchen der Innenbehälter 30" eingesetzt werden kann. In diesem Fall ist allerdings der Boden, das heißt die obere Fläche des Bodeneinsatzes 11" aus der Sicht des Behälters 10" leicht konkav ausgebildet. Auch hinsichtlich einiger weiterer Merkmale unterscheidet sich diese Ausführungsform von den zuvor beschriebenen Ausführungsformen. Der Deckel hat im wesentlichen die Form eines Ringes mit kastenförmigem Querschnitt, was noch weitgehend ähnlich zu dem Querschnitt des Deckels der vorher beschriebenen Ausführungsformen ist. Allerdings weist der Behälter keinen Flanschrand auf, sondern am oberen Rand des Behälters sind, ebenso wie am Außenrand des Deckels 4", Verschlußelemente vorgesehen, die hier nur angedeutet sind und die Form eines Bajonettverschlusses haben. In die innere Öffnung des Deckels 4" ist eine Armatur 5" eingesetzt, durch welche Wasser unter Druck von oben in die Filterkammern l und II bzw. lla eingeleitet wird. Hierzu ist in dem Armaturenkopf 5" ein Verzweigungsventil vorgesehen, welches einen Teil des Wassers durch ein zentrales Außenrohr 60 abwärts leitet, in welchem noch ein inneres Steigrohr 61 konzentrisch angeordnet ist. Ein weiterer Teil des Wassers wird durch das Verzweigungsventil auf eine obere Verteilerplatte 62 geleitet, die das dort eintretende Wasser im wesentlichen gleichmäßig über den gesamten Querschnitt des Behälters verteilt. In dem Filterraum l ist im wesentlichen ein lonenaustauscherharz 59 angeordnet, während in den Filterräumen II und lla im wesentlichen Aktivkohle vorgesehen ist, wobei selbstverständlich auch andere Filtermaterialien verwendet werden könnten. Der Teil des Wassers, welcher durch das äußere Fallrohr 60 abwärts strömt, wird nur durch den Filterraum II geleitet, in welchem Aktivkohle vorhanden ist und gelangt von unten durch eine Siebplatte zu der Eintrittsöffnung des zentralen Steigrohrs 61. Derjenige Teil des Wassers, welcher durch den Filterraum l und das lonenaustauscherharz 59 geleitet wird, tritt im unteren Bereich durch eine mit Öffnungen versehene obere Platte in den Filterraum lla ein, und an der Unterseite dieses Filterraumes lla durch eine Siebplatte wieder aus, vermischt sich mit dem aus dem Filterraum l austretenden Wasser und strömt ebenfalls durch das Steigrohr 61 nach oben. Die Filtermaterialien 57 und 58 sind, wie bereits erwähnt, Aktivkohle. Auf diese Weise wird ein Teil des Wassers, welches nur durch den Filterraum II hindurchtritt, ausschließlich durch Aktivkohle gefiltert und gegebenenfalls auch entkeimt, wohingegen der andere Teil des Wassers, der durch den Filterraum l und den Filterraum lla strömt, sowohl enthärtet wird als auch durch Aktivkohle gefiltert und gegebenenfalls entkeimt bzw. keimreduziert wird.

Die Rolle eines Ausgleichselementes wird von Vliespackungen erfüllt, die im oberen Bereich des Filterraumes 1 angeordnet sind und mit 38" bezeichnet sind, wobei entsprechende Vliese auch in den Filterräumen II und lla angeordnet sein können, die dort mit 55 und 56 bezeichnet sind. Insbesondere das Vliesmaterial 38" ist vorzugsweise elastisch nachgiebig, so daß es Volumenänderungen des im Bereich l vorhandenen Filtermaterials 59 ausgleichen kann, die bei lonenaustauscherharz auftreten können, wenn dieses zunächst im trockenen Zustand ist und erstmalig befeuchtet wird. Konkret ist also bei dieser Ausführungsform die Rolle des Trennelementes zwischen den verschiedenen Filtermaterialien, das nach wie vor vorhanden ist, von der des Ausgleichselementes 38" räumlich getrennt.

## Patentansprüche

1. Wasserfilter mit einem Wasserzulauf und einem Wasserabgang und mit einem im wesentlichen zylindrischen oder konischen Aufnahmebehälter (30) für wenigstens zwei verschiedene Filtermaterialien, welche so angeordnet sind, daß sie zwischen Wasserzulauf und Wasserabgang durchströmt werden, wobei in dem Aufnahmebehälter (30) ein Trennelement (38) vorgesehen ist, das zwei Bereiche (36, 37) des Aufnahmebehälters (30) gegen einen Durchtritt von Filtermaterial voneinander abteilt, **dadurch gekennzeichnet, daß** entweder das Trennelement (38) oder ein anderes, mindestens eines der Filtermaterialien begrenzendes Element (38", 55, 57) aus elastischem oder flexiblem Material besteht und aus dem Aufnahmebehälter entfembar ist.

2. Wasserfilter nach Anspruch 1, **dadurch gekennzeichnet, daß** in dem einen abgeteilten Bereich (36, 37) des Aufnahmebehälters (30) wenigstens ein erstes Filtermaterial oder Filterelement und in dem anderen abgeteilten Bereich (36, 37) wenigstens ein zweites Filtermaterial oder Filterelement vorgesehen ist.

3. Wasserfilter nach Anspruch 1 oder 2, **dadurch gekennzeichnet, daß** ein Filtermaterial ein lonenaustauscherharz und ein anderes Filtermaterial Aktivkohle, vorzugsweise ein Aktivkohlegranulat oder ein Aktivkohleblock ist.

4. Wasserfilter nach einem der Ansprüche 1 bis 3, **dadurch gekennzeichnet, daß** das Trennelement (38) bzw. das Begrenzungselement (38") eine Kreisscheiben- oder Ringform hat, welche dem Innenquerschnitt des Aufnahmebehälters (30) angepaßt ist, und eine Umfangsfläche aufweist, die über den gesamten Umfang an der Innenwand des Aufnahmebehälters anliegt.

5. Wasserfilter nach einem der Ansprüche 1 bis 4, **dadurch gekennzeichnet, daß** das Trennelement (38) bzw. das Begrenzungselement (38") aus lebensmittelechtem Material hergestellt ist.

6. Wasserfilter nach einem der Ansprüche 1 bis 5, **dadurch gekennzeichnet, daß** das Trennelement mehrteilig ausgebildet ist und aus einem zentralen, ringförmigen Teil und einem äußeren ringförmigen Teil besteht, welche jeweils getrennte Aktivkohlefilter von einem lonenaustauscherfiltermaterial trennen.

7. Wasserfilter nach einem der Ansprüche 1 bis 6, **dadurch gekennzeichnet, daß** das Trennelement (38) bzw. das Begrenzungselement (38") aus einem Schaumstoffmaterial oder einem Fasermaterial aus Kunstfasern oder Naturfasern, vorzugsweise Polyethylenfasem (PE), Polypropylenfasern (PP) oder Polyethylenterephthalatfasem (PET), besonders bevorzugt in Form eines Vlieses aufgebaut ist.

8. Wasserfilter nach einem der Ansprüche 1 bis 7, **dadurch gekennzeichnet, daß** das Trennelement (38) bzw. das Begrenzungselement (38") flüssigkeitsdurchlässige Durchtrittsöffnungen, vorzugsweise offene Poren, Kanäle oder Durchgangsbohrungen aufweist.

9. Wasserfilter nach einem der Ansprüche 1 bis 8, **dadurch gekennzeichnet, daß** das Trennelement (38) bzw. das Begrenzungselement (38") eine vorzugsweise mittig angeordnete Durchgangsöffnung (39) für den Durchtritt eines Rohres (31) aufweist, welche dem äußeren Umfang des Rohres (31) angepaßt ist, um einen Durchtritt von Filtermaterial zwischen Trennelement (38) und Rohr (31) zu verhindern.

10. Wasserfilter nach einem der Ansprüche 1 bis 9, **dadurch gekennzeichnet, daß** das Filtermaterial in Form von Körnern, als Granulat, Pulver oder Kugeln vorliegt.
